# EUROPÄISCHE PATENTSCHRIFT

(11) **EP 2 703 289 B1**
(45) Veröffentlichungstag und Bekanntmachung des Hinweises auf die Patenterteilung: **11.03.2020**
(21) Anmeldenummer: 13181209.1
(22) Anmeldetag: 21.08.2013
(51) Int. Cl.: B60N 2/90, B64D 11/06, B23P 11/00, B60N 2/68

(54) **Sitzteilervorrichtung**
Seat dividing device
Dispositif séparateur de siège

(30) Priorität: 31.08.2012 DE 102012108119
(43) Veröffentlichungstag der Anmeldung: 05.03.2014
(73) Patentinhaber: Recaro Aircraft Seating GmbH & Co. KG, 74523 Schwäbisch Hall (DE)
(72) Erfinder: Müller, Kurt, 88213 Ravensburg (DE)
(74) Vertreter: Daub, Thomas

(56) Entgegenhaltungen:
- EP-A1- 1 864 855
- EP-A1- 2 465 722
- WO-A1-82/03366
- WO-A1-2011/162017
- CA-A1- 2 540 908
- DE-A1- 2 751 110
- DE-A1- 19 526 840
- US-A- 4 249 769
- US-A1- 2001 030 455
- US-A1- 2006 290 180
- US-A1- 2007 267 543
- US-A1- 2008 290 242

## Beschreibung

### Stand der Technik

Die Erfindung betrifft eine Fluggastsitzteilervorrichtung nach dem Anspruch 1.

In der WO 82/03366 A1 ist bereits eine Fluggastsitzteilervorrichtung mit zumindest einer Sitzteilereinheit vorgeschlagen worden, die zwei voneinander getrennt ausgebildete Hauptträgerelemente aufweist, wobei die zwei Hauptträgerelemente als zwei getrennt voneinander ausgebildete Seitenwände ausgebildet sind.

Die Aufgabe der Erfindung besteht insbesondere darin, eine gattungsgemäße Vorrichtung mit verbesserten Eigenschaften hinsichtlich eines Gewichts und einer Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fluggastsitzteilervorrichtung mit zumindest einer Sitzteilereinheit, die zumindest vier voneinander getrennt ausgebildete Hauptträgerelemente aufweist, wobei zumindest zwei der Hauptträgerelemente als zwei getrennt voneinander ausgebildete Seitenwände ausgebildet sind und wobei zumindest zwei der Hauptträgerelemente als Verbindungselemente ausgebildet sind, die dazu vorgesehen sind, die zumindest zwei als Seitenwände ausgebildeten Hauptträgerelemente zu verbinden, wobei die zumindest zwei als Verbindungselemente ausgebildeten Hauptträgerelemente zusätzlich als Torsionsstangen ausgebildet sind. Es wird vorgeschlagen, dass die Sitzteilereinheit in zumindest einem montierten Zustand bei Betrachtung in einer Querschnittsebene als ein Kasten ausgebildet ist, wobei der Kasten in dem montierten Zustand bei Betrachtung in der Querschnittsebene ein geschlossenes Profil aufweist. Unter einer "Sitzteilereinheit" soll insbesondere eine Einheit verstanden werden, die zumindest einen Sitzteiler aufweist. Unter einem "Sitzteiler" soll insbesondere ein Bauteil einer Sitzreihe mit zumindest zwei seitlich nebeneinander angeordneten Sitzen verstanden werden, das bezüglich einer vertikal zu einer Aufständerfläche der Sitzreihe ausgerichteten Vertikalrichtung zumindest im Wesentlichen oberhalb zumindest eines Querträgers, insbesondere eines Single Beams und/oder einer Querstange, angeordnet ist. Insbesondere ist der Sitzteiler ein starr ausgebildetes Bauteil der Sitzreihe. Vorzugsweise ist der Sitzteiler zumindest im Wesentlichen bezüglich der Vertikalrichtung oberhalb eines Sitzbodens eines jeweiligen Sitzes der zumindest zwei seitlich nebeneinander angeordneten Sitze der Sitzreihe angeordnet. Der Sitzteiler ist insbesondere dazu vorgesehen, eine Armauflageeinheit zu lagern. Vorzugsweise ist der Sitzteiler dazu vorgesehen, eine Gurtanbindung zu ermöglichen. Insbesondere ist der Sitzteiler zu einer Tragrohraufnahme vorgesehen. Vorzugsweise bildet der Sitzteiler eine seitliche Begrenzung zumindest eines der zumindest zwei seitlich nebeneinander angeordneten Sitze, wobei der Sitzteiler gangseitig und/oder bordseitig angeordnet sein kann, und/oder eine Abgrenzung zwischen zwei seitlich nebeneinander angeordneten Sitzen der zumindest zwei Sitze aus. Insbesondere ist der Sitzteiler ein Bestandteil einer Kraftableitung, welche über die Rückenlehneneinheit, den Sitzteiler, eine Tragrohrstruktur und die Aufständereinheit in eine Aufständerfläche, insbesondere in einen Flugzeugboden, erfolgt. Unter einem "Hauptträgerelement" soll insbesondere ein Element einer an einer Sitzeinheit angebrachten Sitzteilereinheit verstanden werden, das dazu vorgesehen ist, in zumindest einem montierten Zustand der Sitzteilereinheit eine auf die Sitzeinheit ausgeübte Kraft aufzunehmen und an eine weitere Einheit, insbesondere an eine Aufständereinheit, zu übertragen. Unter zwei "voneinander getrennt ausgebildeten" Hauptträgerelementen soll insbesondere verstanden werden, dass die Hauptträgerelemente in zumindest einem Zustand, insbesondere in einem Zustand vor einer Montage der Sitzteilereinheit, getrennt und insbesondere isoliert voneinander ausgebildet sind. Unter "vorgesehen" soll insbesondere speziell ausgelegt und/oder ausgestattet verstanden werden. Durch eine erfindungsgemäße Ausgestaltung kann vorteilhaft eine Fluggastsitzteilervorrichtung flexibel an jeweilige Bedürfnisse angepasst werden, indem jeweils lediglich eine benötigte Anzahl von Hauptträgerelementen verwendet wird. Durch eine geringere Anzahl von Hauptträgerelementen können vorteilhaft Gewicht und Materialsowie Baukosten eingespart werden. Insbesondere kann vorteilhaft eine flexible Anpassung der Fluggastsitzteilervorrichtung an eine jeweilige Sitzeinheit, an welche die Fluggastsitzteilervorrichtung angebracht werden soll, erreicht werden.

Vorzugsweise sind zumindest zwei der Hauptträgerelemente als zwei getrennt voneinander ausgebildete Seitenwände ausgebildet. Insbesondere kann die Sitzteilereinheit mehr als zwei getrennt voneinander ausgebildete Hauptträgerelemente aufweisen. Unter einer "Seitenwand" soll insbesondere eine Wand verstanden werden, die in zumindest einem montierten Zustand der Sitzteilereinheit eine seitliche Begrenzungsfläche der Sitzteilereinheit ausbildet. Vorzugsweise sind die zwei Hauptträgerelemente als zwei einander gegenüberliegende Seitenwände ausgebildet. Insbesondere sind die zwei Hauptträgerelemente als zwei bezüglich einer zumindest im Wesentlichen senkrecht zu einer Sitzrichtung und zumindest im Wesentlichen parallel zu einer Horizontalrichtung ausgerichteten Querrichtung einander gegenüberliegende Seitenwände ausgebildet. Unter einer "Sitzrichtung" soll insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. In einer aufrechten Stellung eines Sitzes, in welcher eine Rückenlehne zumindest im Wesentlichen senkrecht zu einem Boden ausgerichtet ist, ist die Sitzrichtung parallel zu dem Boden und zumindest im Wesentlichen senkrecht zu der von der Rückenlehne gebildeten Rückenlehnenfläche ausgerichtet. Wird die Sitzvorrichtung für einen Fluggastsitz verwendet, entspricht die Sitzrichtung typischerweise der Flugrichtung. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der zu weniger als 5°, vorzugsweise zu weniger als 3° und insbesondere zu weniger als 1° von einem Winkel von 90° abweicht. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der zu weniger als 5°, vorzugsweise zu weniger als 3° und insbesondere zu weniger als 1° von einem Winkel von 0° abweicht. Durch eine erfindungsgemäße Ausgestaltung kann vorteilhaft eine stabile und flexible Fluggastsitzteilervorrichtung erreicht werden, welche entsprechend einer jeweiligen Sitzeinheit, an welche die Fluggastsitzteilervorrichtung angebracht werden soll, angepasst werden kann.

Zudem wird vorgeschlagen, dass zumindest eines der Hauptträgerelemente als Verbindungselement ausgebildet ist. Unter einem "Verbindungselement" soll insbesondere ein Element verstanden werden, das dazu vorgesehen ist, eine Verbindung zwischen zumindest zwei weiteren, von dem Hauptträgerelement getrennt ausgebildeten Elementen, insbesondere zwischen zwei weiteren, von dem Hauptträgerelement getrennt ausgebildeten Hauptträgerelementen, und/oder zwischen zumindest zwei Teilbereichen eines weiteren, von dem Hauptträgerelement getrennt ausgebildeten Elements, insbesondere zwischen zwei Teilbereichen eines weiteren, von dem Hauptträgerelement getrennt ausgebildeten Hauptträgerelements, herzustellen. Insbesondere ist eine Längsrichtung des als Verbindungselement ausgebildeten Hauptträgerelements zumindest im Wesentlichen senkrecht zu zumindest einer Längsrichtung zumindest eines der zwei weiteren, von dem Hauptträgerelement getrennt ausgebildeten Elementen und/oder zu zumindest einer Längsrichtung zumindest eines der zwei Teilbereiche des einen weiteren, von dem Hauptträgerelement getrennt ausgebildeten Elements ausgerichtet. Vorzugsweise ist die Längsrichtung des als Verbindungselement ausgebildeten Hauptträgerelements zumindest im Wesentlichen senkrecht zu der Sitzrichtung ausgerichtet. Insbesondere weist die Sitzteilereinheit zumindest drei getrennt voneinander ausgebildete Hauptträgerelemente auf, wobei zwei der Hauptträgerelemente als zwei getrennt voneinander ausgebildete Seitenwände ausgebildet sind und zumindest eines der Hauptträgerelemente als ein Verbindungselement ausgebildet und dazu vorgesehen ist, die zwei als Seitenwände ausgebildeten Hauptträgerelemente zu verbinden. Es ist denkbar, dass zusätzlich zu den drei Hauptträgerelementen weitere Hauptträgerelemente vorgesehen sind, die als Verbindungselemente ausgebildet und dazu vorgesehen sind, die zwei als Seitenwände ausgebildeten Hauptträgerelemente zu verbinden. In einer weiteren Ausgestaltung der Erfindung ist denkbar, dass die Sitzteilereinheit zumindest zwei getrennt voneinander ausgebildete Hauptträgerelemente aufweist, wobei eines der Hauptträgerelemente als eine einstückig ausgebildete, zumindest im Wesentlichen U-förmig gebogene Seitenwand ausgebildet ist und zumindest eines der Hauptträgerelemente als ein Verbindungselement ausgebildet und dazu vorgesehen ist, zwei Teilbereiche, insbesondere zwei Schenkel, des U-förmig gebogenen und als Seitenwand ausgebildeten Hauptträgerelements zu verbinden. Es ist denkbar, dass zusätzlich zu den drei Hauptträgerelementen weitere Hauptträgerelemente vorgesehen sind, die als Verbindungselemente ausgebildet und dazu vorgesehen sind, die zwei Teilbereiche des U-förmig gebogenen und als Seitenwand ausgebildeten Hauptträgerelements zu verbinden. Unter einem "U-förmig gebogenen" Element soll insbesondere ein Element verstanden werden, das zumindest drei Teilbereiche aufweist, die einstückig oder mehrstückig ausgebildet und zumindest über einen Großteil einer jeweiligen Längserstreckung als eine Gerade ausgebildet sind, wobei einer der Teilbereiche an zwei entgegengesetzten Enden jeweils mit einem Ende eines weiteren Teilbereichs direkt verbunden ist und wobei die beiden weiteren Teilbereiche in dieselbe, zumindest im Wesentlichen senkrecht zu dem einen Teilbereich ausgerichtete Richtung ausgerichtet sind. Vorzugsweise ist ein Kontaktbereich zwischen den jeweiligen Teilbereichen eckig und/oder abgerundet ausgebildet. Unter einem "zumindest im Wesentlichen U-förmig gebogenen" Element soll insbesondere ein Element verstanden werden, bei dem die beiden weiteren Teilbereiche jeweils einen Winkel in einem Bereich von 60° bis 120° mit dem einen Teilbereich einschließen, wobei sich ein Winkel eines der weiteren Teilbereiche mit dem einen Teilbereich von einem Winkel eines weiteren, von dem einen weiteren Teilbereich getrennt ausgebildeten weiteren Teilbereichs mit dem einen Teilbereich unterscheiden kann. Unter der Wendung, dass die Teilbereiche "zumindest über einen Großteil einer jeweiligen Längserstreckung als eine Gerade ausgebildet" sind, soll insbesondere verstanden werden, dass jeder der Teilbereiche bei einer jeweiligen Projektion der Teilbereiche in eine jeweilige Ebene jeweils eine maximale Längserstreckung aufweist, wobei in einem Normalzustand der Teilbereiche, in welchem die Teilbereiche zusammen ein U-förmig gebogenes Element ausbilden, jeweils ein Anteil von mehr als 40 %, vorzugsweise von mehr als 45 % und insbesondere von mehr als 50 % der jeweiligen maximalen Längserstreckung als eine Gerade ausgebildet ist. Durch eine erfindungsgemäße Ausgestaltung kann vorteilhaft eine stabile und flexible Fluggastsitzteilervorrichtung erreicht werden, welche entsprechend einer jeweiligen Sitzeinheit, an welche die Fluggastsitzteilervorrichtung angebracht werden soll, angepasst werden kann.

Vorzugsweise ist die Sitzteilereinheit in zumindest einem montierten Zustand bei Betrachtung in einer Querschnittsebene als ein Kasten ausgebildet. Unter einem "Kasten" soll insbesondere ein Element verstanden werden, das in dem montierten Zustand bei Betrachtung in der Querschnittsebene ein zumindest im Wesentlichen geschlossenes Profil aufweist. Insbesondere umschließt das geschlossene Profil in dem montierten Zustand bei Betrachtung in der Querschnittsebene eine als eine Ausnehmung ausgebildete Querschnittsfläche. Vorzugsweise ist in dem montierten Zustand bei Betrachtung in der Querschnittsebene der Kasten zumindest im Wesentlichen als ein Rechteck ausgebildet. Insbesondere umschließt die Sitzteilereinheit bei einer Betrachtung in drei Dimensionen einen Hohlraum. Unter einem "Hohlraum" soll insbesondere ein Raum verstanden werden, der von zumindest einem, insbesondere von zumindest zwei Elementen begrenzt ist, und zwar zumindest von zumindest drei und vorzugsweise von zumindest vier Seiten. Unter der Wendung, dass "der Kasten zumindest im Wesentlichen als ein Rechteck ausgebildet" ist, soll insbesondere verstanden werden, dass der Kasten in der Querschnittsebene betrachtet eine Flächenerstreckung aufweist, die zu weniger als 20 %, vorzugsweise zu weniger als 10 % und insbesondere zu weniger als 5 % von einer Flächenerstreckung eines kleinsten, den Kasten umschließenden Rechtecks abweicht. Unter einem "geschlossenen Profil" soll insbesondere ein Profil verstanden werden, das aus einem und/oder mehreren Teilstücken ausgebildet ist. Insbesondere sind bei einer mehrteiligen Ausführung des geschlossenen Profils die einzelnen Teilstücke des geschlossenen Profils direkt derart miteinander verbunden, dass eine Entstehung einer Lücke zwischen den einzelnen Teilstücken des geschlossenen Profils vermieden ist. Vorzugsweise weist das geschlossene Profil bei einer einteiligen Ausbildung bei einer Abwicklung des geschlossenen Profils in einer Ebene zwei durch eine Gesamtlängserstreckung des geschlossenen Profils getrennte Enden auf, die in einem Normalzustand des geschlossenen Profils direkt derart miteinander verbunden sind, dass eine Entstehung einer Lücke zwischen den zwei Enden des geschlossenen Profils vermieden ist. Unter einem "zumindest im Wesentlichen geschlossenen Profil" soll insbesondere ein Profil verstanden werden, bei dem bei einer Abwicklung des geschlossenen Profils in einer Ebene ein Betrag einer Erstreckung der Lücke zwischen den beiden durch eine Gesamtlängserstreckung des geschlossenen Profils getrennten Enden des geschlossenen Profils und/oder eine Summe eines jeweiligen Betrags einer jeweiligen Erstreckung der Lücken zwischen den einzelnen Teilstücken des geschlossenen Profils weniger als 5 %, vorzugsweise weniger als 3 % und insbesondere weniger als 1 % eines Betrags einer Gesamtlängserstreckung des geschlossenen Profils beträgt. Unter einem "Normalzustand" des geschlossenen Profils soll insbesondere ein Zustand des geschlossenen Profils verstanden werden, in welchem das geschlossene Profil derart geformt ist, dass das geschlossene Profil einen Kasten ausbildet, der zumindest im Wesentlichen als ein Rechteck ausgebildet ist. Durch eine erfindungsgemäße Ausgestaltung kann vorteilhaft ein Gewicht der Sitzteilereinheit reduziert werden. Ferner kann durch die erfindungsgemäße Ausgestaltung eine Stabilität der Sitzteilereinheit und insbesondere eine Torsionssteifigkeit der Sitzteilereinheit erhöht werden.

Ferner wird vorgeschlagen, dass zumindest eines der Hauptträgerelemente von einem dünnwandigen Element gebildet ist. Insbesondere ist zumindest eines der Hauptträgerelemente als ein Blech ausgebildet. Unter einem "dünnwandigen Element" soll insbesondere ein Element verstanden werden, das eine Dicke aufweist, die wesentlich kleiner ist als eine Breite und/oder eine Länge des Elements. Unter einer "Dicke" des Elements soll insbesondere ein Minimum unter den maximalen Ausdehnungen des Elements entlang beliebiger Raumrichtungen verstanden werden. Unter einer "maximalen Ausdehnung" eines Elements entlang einer Raumrichtung soll insbesondere die maximale Länge aller Strecken verstanden werden, die zwei Randpunkte des Elements verbinden und parallel zu der Raumrichtung verlaufen. Unter einer "Breite" und einer "Länge" des Elements sollen insbesondere die maximalen Ausdehnungen des Elements entlang von zwei Raumrichtungen verstanden werden, die zumindest im Wesentlichen senkrecht zueinander stehen und vorzugsweise zumindest im Wesentlichen senkrecht zu einer Raumrichtung stehen, entlang der das Element als maximale Ausdehnung die Dicke aufweist. Insbesondere sind Länge und Breite des Elements, die maximalen Ausdehnungen entlang von Raumrichtungen, für die die Summe der maximalen Ausdehnungen maximal sind. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der zu weniger als 5°, vorzugsweise zu weniger als 3° und insbesondere zu weniger als 1° von einem Winkel von 90° abweicht. Durch eine erfindungsgemäße Ausgestaltung kann vorteilhaft ein Gewicht der Sitzteilereinheit reduziert werden.

Zudem wird vorgeschlagen, dass zumindest eines der Hauptträgerelemente zumindest teilweise in einem Trennverfahren hergestellt ist. Insbesondere ist zumindest eines der Hauptträgerelemente zumindest teilweise in einem Laserschnittverfahren hergestellt. Vorzugsweise ist zumindest eines der Hauptträgerelemente zumindest teilweise in einem Stanzverfahren hergestellt. Insbesondere ist zumindest eines der Hauptträgerelemente zumindest teilweise in einem Wasserstrahlschneidverfahren hergestellt. Unter der Wendung, dass zumindest eines der Hauptträgerelemente "zumindest teilweise in einem Trennverfahren hergestellt" ist, soll insbesondere verstanden werden, dass ein Betrag einer Gesamtoberfläche des Hauptträgerelements zu mehr als 80 %, vorzugsweise zu mehr als 85 % und insbesondere zu mehr als 90 % in einem Trennverfahren hergestellt ist. Durch eine erfindungsgemäße Ausgestaltung können vorteilhaft mehrere verschiedene Trennverfahren zu einer Herstellung der Hauptträgerelemente verwendet und damit eine Flexibilität erhöht werden.

Ferner wird vorgeschlagen, dass zumindest eines der Hauptträgerelemente zumindest teilweise in einem 3D-Verfahren hergestellt ist. Unter der Wendung, dass zumindest eines der Hauptträgerelemente "zumindest teilweise in einem 3D-Verfahren hergestellt" ist, soll insbesondere verstanden werden, dass ein Betrag einer Gesamtoberfläche des Hauptträgerelements zu mehr als 80 %, vorzugsweise zu mehr als 85 % und insbesondere zu mehr als 90 % in einem 3D-Verfahren hergestellt ist. Durch eine erfindungsgemäße Ausgestaltung können vorteilhaft die Hauptträgerelemente flexibel hergestellt werden.

Weiterhin wird vorgeschlagen, dass zumindest eines der Hauptträgerelemente zumindest im Wesentlichen aus einem hochfesten Metall ausgebildet ist. Insbesondere weist das hochfeste Metall eine Zugfestigkeit in einem Bereich von 1200 N/mm² und 1400 N/mm² auf. Alternativ ist denkbar, dass das hochfeste Metall eine Zugfestigkeit von mehr als 1400 N/mm² aufweist. Beispielsweise ist zumindest eines der Hauptträgerelemente zumindest im Wesentlichen aus hochfestem Aluminium ausgebildet. Ebenfalls denkbar ist, dass zumindest eines der Hauptträgerelemente zumindest im Wesentlichen aus hochfestem Aluminium ausgebildet ist. Insbesondere ist zumindest eines der Hauptträgerelemente zumindest im Wesentlichen aus Edelstahl ausgebildet. Insbesondere ist zumindest eines der Hauptträgerelemente zumindest im Wesentlichen aus hochfestem Edelstahl ausgebildet. Vorzugsweise ist zumindest eines der Hauptträgerelemente zumindest im Wesentlichen aus aushärtbarem Edelstahl ausgebildet. Insbesondere ist zumindest eines der Hauptträgerelemente zumindest im Wesentlichen aus schweißbarem Edelstahl ausgebildet. Unter der Wendung, dass zumindest eines der Hauptträgerelemente "zumindest im Wesentlichen aus einem hochfesten Metall ausgebildet" ist, soll insbesondere verstanden werden, dass das zumindest eine Hauptträgerelement zu einem Massenanteil von mehr als 90 %, vorzugsweise von mehr als 93 % und insbesondere von mehr als 95 % aus dem hochfesten Metall gebildet ist. Durch eine erfindungsgemäße Ausgestaltung kann vorteilhaft durch Verwendung verschiedener hochfester Metalle eine flexible Sitzteilereinheit erreicht werden. Zudem kann durch eine Verwendung eines rostfreien Edelstahls eine Lebensdauer der Sitzteilereinheit erhöht werden.

Weiterhin wird vorgeschlagen, dass zumindest eines der Hauptträgerelemente zumindest im Wesentlichen aus einem Faserverbundwerkstoff ausgebildet ist. Insbesondere ist zumindest eines der Hauptträgerelemente zumindest im Wesentlichen aus CFK ausgebildet. Alternativ ist denkbar, dass zumindest eines der Hauptträgerelemente zumindest im Wesentlichen aus zumindest einem Organoblech ausgebildet ist. Insbesondere ist zumindest eines der Hauptträgerelemente zumindest im Wesentlichen aus einem hochfesten Faserverbundwerkstoff ausgebildet. Vorzugsweise ist zumindest eines der Hauptträgerelemente zumindest im Wesentlichen aus einem aushärtbaren Faserverbundwerkstoff ausgebildet. Insbesondere ist zumindest eines der Hauptträgerelemente zumindest im Wesentlichen aus einem schweißbaren Faserverbundwerkstoff ausgebildet. Vorzugsweise ist zumindest eines der Hauptträgerelemente zumindest im Wesentlichen aus einer und/oder mehrerer Faserverbundwerkstoff-Platten ausgebildet. Unter der Wendung, dass zumindest eines der Hauptträgerelemente "zumindest im Wesentlichen aus einem Faserverbundwerkstoff ausgebildet" ist, soll insbesondere verstanden werden, dass das zumindest eine Hauptträgerelement zu einem Massenanteil von mehr als 90 %, vorzugsweise von mehr als 93 % und insbesondere von mehr als 95 % aus dem Faserverbundwerkstoff gebildet ist. Durch eine erfindungsgemäße Ausgestaltung kann vorteilhaft eine Flexibilität durch Verwendung verschiedener Zusammensetzungen des Faserverbundwerkstoffs erhöht werden.

Ferner wird vorgeschlagen, dass zumindest zwei der Hauptträgerelemente über eine Schweißverbindung verbunden sind. Alternativ ist denkbar, dass zumindest zwei der Hauptträgerelemente über eine Klebeverbindung verbunden sind. Insbesondere sind zumindest zwei der Hauptträgerelemente über eine Laserschweißverbindung verbunden. Durch eine erfindungsgemäße Ausgestaltung kann vorteilhaft eine stabile Sitzteilereinheit erreicht werden. Zudem können durch eine Einsparung von Verbindungsmitteln, wie beispielsweise Schrauben, Nieten und/oder Rastmitteln, Gewicht und Baukosten reduziert werden. Zudem kann durch die erfindungsgemäße Ausgestaltung eine sichere Verbindung zwischen den Hauptträgerelementen erreicht werden.

Zudem wird vorgeschlagen, dass zumindest zwei der Hauptträgerelemente über eine Steckverbindung verbunden sind. Ebenfalls denkbar ist, dass zumindest zwei der Hauptträgerelemente durch Clenchen, durch ein 3D-Druckverfahren sowie durch Schmieden und/oder Befräsen verbunden sind. Unter einer "Steckverbindung" soll insbesondere eine Verbindung zwischen zumindest zwei Elementen, insbesondere zwischen zumindest zwei Hauptträgerelementen, verstanden werden, bei welcher in einem verbundenen Zustand eines der Elemente in zumindest einem Teilbereich des Elements zumindest teilweise von einem weiteren, von dem einen Element getrennt ausgebildeten Element umschlossen ist. Insbesondere ist das eine Element in dem verbundenen Zustand in zumindest einem Endbereich des Elements von dem weiteren Element umschlossen. Durch eine erfindungsgemäße Ausgestaltung kann vorteilhaft eine flexible Verbindung zwischen den Hauptträgerelementen erreicht werden, die schnell herstellbar und lösbar ist.

In einer weiteren Ausgestaltung der Erfindung wird ein Sitz, insbesondere ein Fluggastsitz, mit zumindest einer erfindungsgemäßen Fluggastsitzteilervorrichtung vorgeschlagen. Durch eine erfindungsgemäße Ausgestaltung kann vorteilhaft ein Sitz mit einer erfindungsgemäßen Fluggastsitzteilervorrichtung ausgestattet werden, wodurch ein besonders leichter Sitz erreicht werden kann.

In einer weiteren Ausgestaltung der Erfindung wird ein Verfahren zu einer Herstellung einer erfindungsgemäßen Fluggastsitzteilervorrichtung vorgeschlagen. Durch eine erfindungsgemäße Ausgestaltung kann vorteilhaft eine Fluggastsitzteilervorrichtung schnell, sicher und reproduzierbar hergestellt werden.

Ferner wird vorgeschlagen, dass die Hauptträgerelemente durch zumindest eine SteckVerbindung miteinander verbunden werden. Durch eine erfindungsgemäße Ausgestaltung können die Hauptträgerelemente vorteilhaft einfach und schnell miteinander verbunden werden, wodurch eine flexible Verbindung zwischen den Hauptträgerelementen erreicht werden kann, die schnell herstellbar und lösbar ist.

Zudem wird vorgeschlagen, dass die Hauptträgerelemente geschweißt werden. Insbesondere werden die Hauptträgerelemente lasergeschweißt. Durch eine erfindungsgemäße Ausgestaltung kann vorteilhaft eine stabile Sitzteilereinheit erreicht werden. Zudem können durch eine Einsparung von Verbindungsmitteln Gewicht und Baukosten reduziert werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer Sitzreihe mit einem erfindungsgemäßen Sitz mit einer erfindungsgemäßen Fluggastsitzteilervorrichtung,
- Fig. 2: eine erfindungsgemäße Fluggastsitzteilervorrichtung in einer dreidimensionalen Darstellung,
- Fig. 3: die erfindungsgemäße Fluggastsitzteilervorrichtung aus Fig. 1 in einer Explosionsdarstellung und
- Fig. 4a-d: verschiedene Verfahrensschritte eines Verfahrens zu einer Montage der erfindungsgemäßen Fluggastsitzteilervorrichtung der Fig. 1 und 2.

### Beschreibung des Ausführungsbeispiels

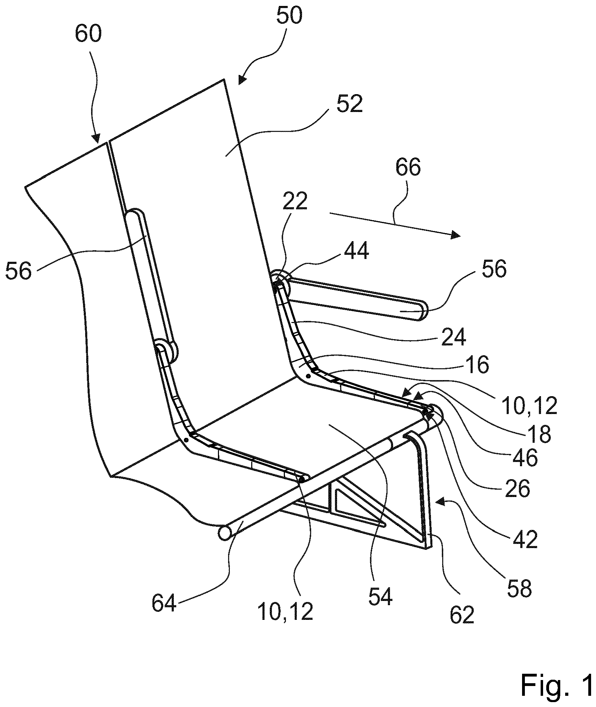

Fig. 1 zeigt einen Ausschnitt einer Sitzreihe mit einem erfindungsgemäßen Sitz 50 mit einer erfindungsgemäßen Fluggastsitzteilervorrichtung 10. Zusätzlich zu der einen Fluggastsitzteilervorrichtung 10 des Sitzes 50 ist eine weitere Fluggastsitzteilervorrichtung 10, die sowohl dem Sitz 50 als auch einem dem Sitz 50 benachbarten, nur ausschnittsweise dargestellten Sitz 60 zuzurechnen ist, gezeigt. Von den beiden Fluggastsitzteilervorrichtungen 10 ist in Fig. 1 der Übersichtlichkeit halber lediglich eine gänzlich mit Bezugszeichen versehen. Der erfindungsgemäße Sitz 50 weist eine Rückenlehne 52, einen Sitzboden 54 sowie zwei Armauflageelemente 56 auf. Der Sitz 50 ist auf einer Aufständereinheit 58 der Sitzreihe aufgeständert. Von der Aufständereinheit 58 sind lediglich ein Fußelement 62 sowie ein Querträger 64 gezeigt, da ein verbleibender Rest der Aufständereinheit 58 außerhalb des gezeigten Ausschnitts der Sitzreihe angeordnet und/oder von anderen Teilen der Sitzreihe verdeckt ist.

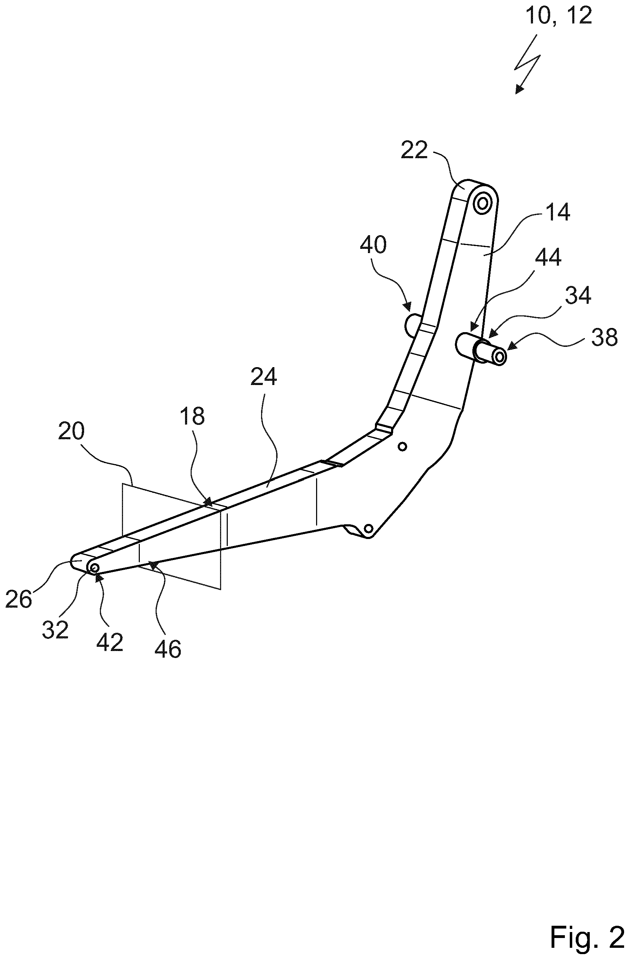

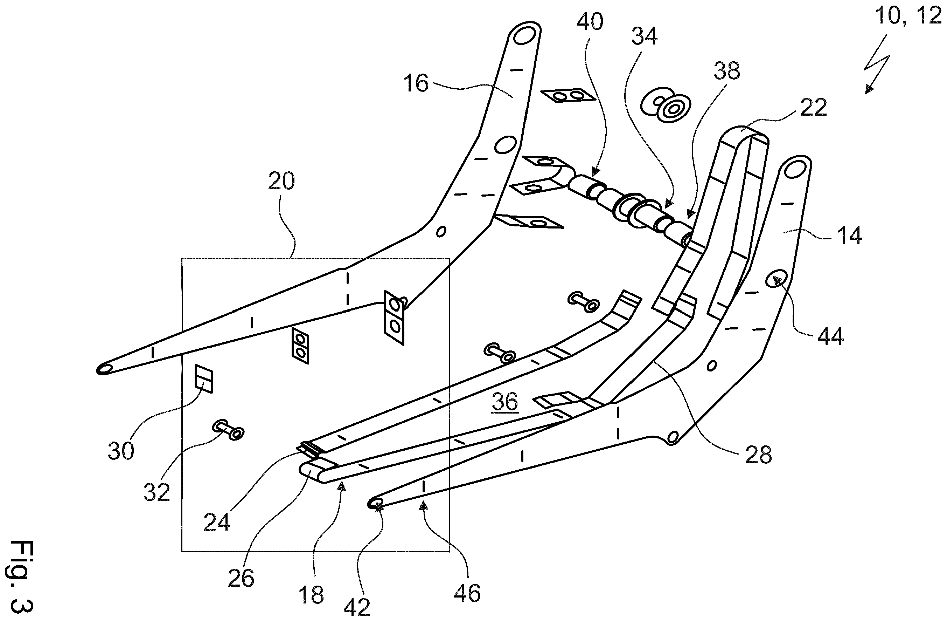

Fig. 2 zeigt in einer dreidimensionalen Darstellung die erfindungsgemäße Fluggastsitzteilervorrichtung 10, mit einer Sitzteilereinheit 12, die mehrere voneinander getrennt ausgebildete Hauptträgerelemente 14, 16, 18, 30, 32, 34 aufweist (vgl. auch Fig. 3). Von den Hauptträgerelementen 14, 16, 18, 30, 32, 34 sind in Fig. 2 lediglich die Hauptträgerelemente 14, 18, 32, 34 gezeigt, da die Hauptträgerelemente 16, 30 verdeckt sind. Zwei der Hauptträgerelemente 14, 16 sind als zwei getrennt voneinander ausgebildete Seitenwände ausgebildet. Mehrere der Hauptträgerelemente 18, 30, 32, 34 sind als ein Verbindungselement ausgebildet. Das als Verbindungselement ausgebildete Hauptträgerelement 18 ist dazu vorgesehen, in einem montierten Zustand der Sitzteilereinheit 12 die als Seitenwände ausgebildeten Hauptträgerelemente 14, 16 miteinander zu verbinden. Das als Verbindungselement ausgebildete Hauptträgerelement 18 ist mehrteilig ausgebildet (vgl. Fig. 3) und weist vier Teilstücke 22, 24, 26, 28 auf. Die Teilstücke 22, 24, 26, 28 sind in einem montierten Zustand der Sitzteilereinheit 12 miteinander über jeweils eine Schweißverbindung verbunden. Zudem sind das Hauptträgerelement 18 und damit ebenfalls die Teilstücke 22, 24, 26, 28 in dem montierten Zustand der Sitzteilereinheit 12 über jeweils eine Schweißverbindung mit den als Seitenwänden ausgebildeten Hauptträgerelementen 14, 16 verbunden. Alternativ ist denkbar, dass das Hauptträgerelement 18 und damit ebenfalls die Teilstücke 22, 24, 26, 28 in dem montierten Zustand der Sitzteilereinheit 12 über mehrere Schweißverbindungen mit den als Seitenwänden ausgebildeten Hauptträgerelementen 14, 16 verbunden sind. Die Hauptträgerelemente 14, 16, 18 schließen in dem montierten Zustand der Sitzteilereinheit 12 einen Hohlraum 36 ein.

Fig. 3 zeigt die erfindungsgemäße Fluggastsitzteilervorrichtung 10 aus Fig. 2 in einer Explosionsdarstellung. Zudem kann anhand von Fig. 3 erkannt werden, dass die Hauptträgerelemente 14, 16, 18, 30 von dünnwandigen Elementen gebildet sind. In dem gezeigten Ausführungsbeispiel sind die Hauptträgerelemente 14, 16, 18, 30 aus dünnwandigen Blechen ausgebildet. Die Hauptträgerelemente 32, 34 sind zusätzlich zu einer Ausbildung als Verbindungselement jeweils als Torsionsstangen ausgebildet. Sämtliche der Hauptträgerelemente 14, 16, 18, 30, 32, 34 sind in einem Trennverfahren hergestellt. Im vorliegenden Ausführungsbeispiel sind die Hauptträgerelemente 14, 16, 18, 30, 32, 34 in einem Laserschnittverfahren hergestellt. Alternativ und/oder zusätzlich ist denkbar, dass die Hauptträgerelemente 14, 16, 18, 30, 32, 34 in einem Wasserstrahlschneidverfahren hergestellt sind. Alternativ und/oder zusätzlich ist denkbar, dass die Hauptträgerelemente 14, 16, 18, 30, 32, 34 in einem Stanzverfahren hergestellt sind. Weiterhin ist alternativ und/oder zusätzlich denkbar, dass die Hauptträgerelemente 14, 16, 18, 30, 32, 34 in einem 3D-Verfahren hergestellt sind. Zudem sind alle Hauptträgerelemente 14, 16, 18, 30, 32, 34 aus einem hochfesten Metall ausgebildet. Alle Hauptträgerelemente 14, 16, 18, 30, 32, 34 sind aus einem hochfesten, aushärtbaren und schweißbaren Metall ausgebildet. In dem vorliegenden Ausführungsbeispiel sind die Hauptträgerelemente 14, 16, 18, 30, 32, 34 aus hochfestem, aushärtbarem und schweißbarem Edelstahl ausgebildet. Alternativ ist denkbar, dass die Hauptträgerelemente 14, 16, 18, 30, 32, 34 aus einem Faserverbundwerkstoff ausgebildet sind. Dabei sind Hauptträgerelemente 14, 16, 18, 30, 32, 34 aus einem hochfesten Faserverbundwerkstoff ausgebildet. Aus einer kombinierten Betrachtung der Fig. 1-4 geht hervor, dass die Sitzteilereinheit 12 in dem montierten Zustand bei Betrachtung in einer Querschnittsebene 20 als ein Kasten ausgebildet ist. Bei Betrachtung in einer dreidimensionalen Darstellung folgt daraus, dass die Sitzteilereinheit 12 in dem montierten Zustand den Hohlraum 36 umschließt.

Anhand von Fig. 3 soll im Folgenden ein Aufbau der erfindungsgemäßen Fluggastsitzteilervorrichtung 10 erläutert werden. Wie bereits erwähnt, sind in dem montierten Zustand der Sitzteilereinheit 12 die Hauptträgerelemente 14, 16 durch das Hauptträgerelement 18 miteinander verbunden. Dadurch können vorteilhaft eine Stabilität und insbesondere eine Torsionssteifigkeit der Sitzteilereinheit 12 verbessert werden. Um die Stabilität der Sitzteilereinheit 12 weiter zu verbessern, sind die Hauptträgerelemente 30, 32 zusätzlich zu einer Ausbildung als Verbindungselemente als Stabilisierungselemente ausgebildet. Von den Hauptträgerelementen 30, 32 ist in Fig. 3 der Übersichtlichkeit halber jeweils lediglich eines mit Bezugszeichen versehen. Die Hauptträgerelemente 30, 32 sind gänzlich in dem von den Hauptträgerelementen 14, 16, 18 ausgebildeten Hohlraum 36 angeordnet und jeweils mit den Hauptträgerelementen 14, 16, 18 verbunden. Das Hauptträgerelement 34 ist zusätzlich zu einer Ausbildung als Verbindungselement als eine Torsionsanbindung für die Rückenlehne 52 des Sitzes 50 (vgl. Fig. 1), an welche die Fluggastsitzteilervorrichtung 10 angebracht werden kann, ausgebildet. Zu diesem Zweck weist das Hauptträgerelement 34 zwei auf voneinander abweisenden Seiten des Hauptträgerelements 34 angeordnete Teilbereiche 38, 40 auf, welche in dem montierten Zustand der Sitzteilereinheit 12 außerhalb des von den Hauptträgerelementen 14, 16, 18 ausgebildeten Hohlraums 36 angeordnet sind. Ein weiterer, zwischen den Teilbereichen 38, 40 angeordneter Teilbereich des Hauptträgerelements 34 ist in dem montierten Zustand der Sitzteilereinheit 12 innerhalb des von den Hauptträgerelementen 14, 16, 18 ausgebildeten Hohlraums 36 angeordnet. Sollte die Sitzteilereinheit 12 eine seitliche Begrenzung des Sitzes 50 ausbilden, kann einer der Teilbereiche 38, 40 entfallen, so dass das Hauptträgerelement 34 bündig mit dem betreffenden Hauptträgerelement 14, 16 abschließt. Beispielsweise ist in der in Fig. 1 gezeigten Anordnung bei der Sitzteilereinheit 12 der Fluggastsitzteilervorrichtung 10, bei welcher das Armauflageelement 56 des Sitzes 50 in eine Sitzrichtung 66 weist, der Teilbereich 38 des Hauptträgerelements 34 entfallen.

In dem montierten Zustand der Sitzteilereinheit 12 sind die Hauptträgerelemente 14, 16, 18, 30, 32, 34 über eine Steckverbindung verbunden. Um eine solche Steckverbindung zu ermöglichen, weisen die Hauptträgerelemente 14, 16 einer Form der Hauptträgerelemente 32 entsprechende Befestigungsausnehmungen 42 auf. Eine jeweilige Anzahl von Befestigungsausnehmungen 42 entspricht einer Anzahl von Hauptträgerelementen 32. Von den Befestigungsausnehmungen 42 ist in den Fig. 2-4 der Übersichtlichkeit halber jeweils lediglich eine mit Bezugszeichen versehen. In dem montierten Zustand der Sitzteilereinheit 12 greifen die Hauptträgerelemente 32 mit ihren jeweiligen Enden in die Befestigungsausnehmungen 42 der Hauptträgerelemente 14, 16 ein.

Zu einer Realisierung einer Steckverbindung zwischen den Hauptträgerelementen 14, 16 und dem Hauptträgerelement 34 weisen die Hauptträgerelemente 14, 16 jeweils eine Befestigungsausnehmung 44 auf, welche einer Form des Hauptträgerelements 34 entspricht. Von den Befestigungsausnehmungen 44 ist in den Fig. 2-3 der Übersichtlichkeit halber jeweils lediglich eine mit Bezugszeichen versehen. In dem montierten Zustand der Sitzteilereinheit 12 ist das Hauptträgerelement 34 derart in die jeweilige Befestigungsausnehmung 44 des jeweiligen Hauptträgerelements 14, 16 eingeführt, dass die Teilbereiche 38, 40 außerhalb und der weitere Teilbereich innerhalb des von den Hauptträgerelementen 14, 16, 18 aufgespannten Hohlraums 36 angeordnet sind.

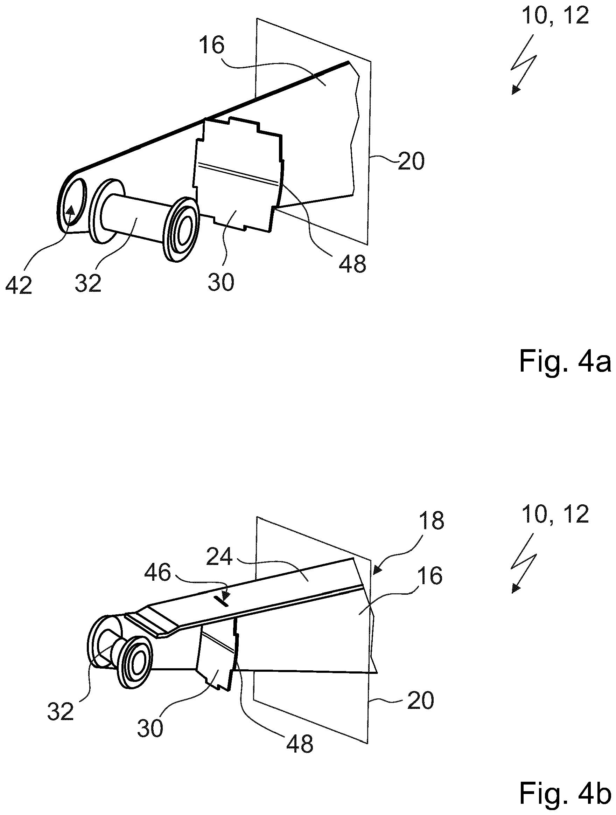

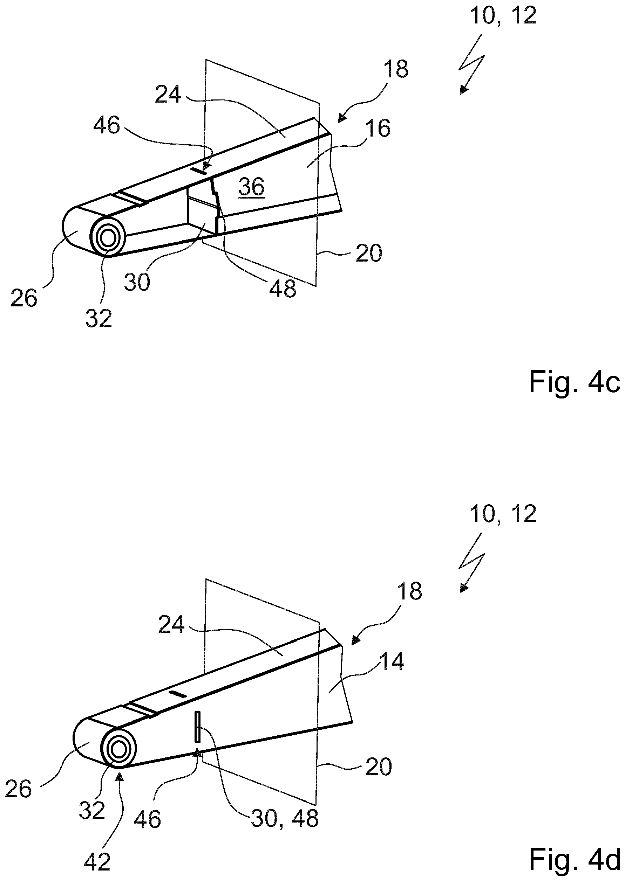

Die Hauptträgerelemente 14, 16, 18 weisen eine Vielzahl von Durchstecköffnungen 46 auf. Entsprechend zu einer Form der Durchstecköffnungen 46 weisen die Hauptträgerelemente 30 jeweils zumindest vier Durchsteckvorsprünge 48 auf (vgl. Fig. 4a-d). Von den Durchstecköffnungen 46 ist in den Fig. 2-4 der Übersichtlichkeit halber jeweils lediglich eine mit Bezugszeichen versehen. Analog hierzu ist von den Durchsteckvorsprüngen 48 in den Fig. 4a-c der Übersichtlichkeit halber jeweils lediglich einer mit Bezugszeichen versehen. Die Durchstecköffnungen 46 sind dazu vorgesehen, in dem montierten Zustand der Sitzteilereinheit 12 die Durchsteckvorsprünge 48 der Hauptträgerelemente 30 aufzunehmen.

Zusätzlich dazu, dass die Hauptträgerelemente 14, 16, 18, 30, 32, 34 über eine Steckverbindung verbunden sind, sind die Hauptträgerelemente 14, 16, 18, 30, 32, 34 über eine Schweißverbindung verbunden. In dem gezeigten Ausführungsbeispiel sind die Hauptträgerelemente 14, 16, 18, 30, 32, 34 über eine Laserschweißverbindung verbunden.

In den Fig. 4a-d ist ein Verfahren zu einer Montage der erfindungsgemäßen Fluggastsitzteilervorrichtung 10 dargestellt. Zunächst werden die Hauptträgerelemente 14, 16, 18, 30, 32, 34 einer Montageposition entsprechend angeordnet. Anschließend werden die Hauptträgerelemente 14, 16, 18, 30, 32, 34 durch mehrere Steckverbindungen miteinander verbunden. Zuletzt werden die Hauptträgerelemente 14, 16, 18, 30, 32, 34 geschweißt. In dem gezeigten Ausführungsbeispiel werden die Hauptträgerelemente 14, 16, 18, 30, 32, 34 lasergeschweißt.

**Bezugszeichen**

| | | | |
|---|---|---|---|
| 10 | Fluggastsitzteilervorrichtung | 56 | Armauflageelement |
| 12 | Sitzteilereinheit | 58 | Aufständereinheit |
| 14 | Hauptträgerelement | 60 | Sitz |
| 16 | Hauptträgerelement | 62 | Fußelement |
| 18 | Hauptträgerelement | 64 | Querträger |
| 20 | Querschnittsebene | 66 | Sitzrichtung |
| 22 | Teilstück | | |
| 24 | Teilstück | | |
| 26 | Teilstück | | |
| 28 | Teilstück | | |
| 30 | Hauptträgerelement | | |
| 32 | Hauptträgerelement | | |
| 34 | Hauptträgerelement | | |
| 36 | Hohlraum | | |
| 38 | Teilbereich | | |
| 40 | Teilbereich | | |
| 42 | Befestigungsausnehmung | | |
| 44 | Befestigungsausnehmung | | |
| 46 | Durchstecköffnung | | |
| 48 | Durchsteckvorsprung | | |
| 50 | Sitz | | |
| 52 | Rückenlehne | | |
| 54 | Sitzboden | | |

## Patentansprüche

1. Fluggastsitzteilervorrichtung, mit zumindest einer Sitzteilereinheit (12), die zumindest vier voneinander getrennt ausgebildete Hauptträgerelemente (14, 16, 18, 30, 32, 34) aufweist, wobei zumindest zwei der Hauptträgerelemente (14, 16, 18, 30, 32, 34) als zwei getrennt voneinander ausgebildete Seitenwände ausgebildet sind und wobei zumindest zwei der Hauptträgerelemente (14, 16, 18, 30, 32, 34) als Verbindungselemente ausgebildet sind, die dazu vorgesehen sind, die zumindest zwei als Seitenwände ausgebildeten Hauptträgerelemente (14, 16) zu verbinden, wobei die zumindest zwei als Verbindungselemente ausgebildeten Hauptträgerelemente (32, 34) zusätzlich als Torsionsstangen ausgebildet sind,
**dadurch gekennzeichnet, dass**
die Sitzteilereinheit (12) in zumindest einem montierten Zustand bei Betrachtung in einer Querschnittsebene (20) als ein Kasten ausgebildet ist, wobei der Kasten in dem montierten Zustand bei Betrachtung in der Querschnittsebene ein geschlossenes Profil aufweist.

2. Fluggastsitzteilervorrichtung nach Anspruch 1,
**dadurch gekennzeichnet, dass**
zumindest eines der Hauptträgerelemente (18, 30, 32, 34) als Verbindungselement ausgebildet ist.

3. Fluggastsitzteilervorrichtung nach Anspruch 1 oder 2,
**dadurch gekennzeichnet, dass**
zumindest eines der Hauptträgerelemente (14, 16, 18, 30) von einem dünnwandigen Element gebildet ist.

4. Fluggastsitzteilervorrichtung nach einem der vorhergehenden Ansprüche,
**dadurch gekennzeichnet, dass**
zumindest eines der Hauptträgerelemente (14, 16, 18, 30, 32, 34) zumindest teilweise in einem Trennverfahren hergestellt ist.

5. Fluggastsitzteilervorrichtung nach einem der vorhergehenden Ansprüche,
**dadurch gekennzeichnet, dass**
zumindest eines der Hauptträgerelemente (14, 16, 18, 30, 32, 34) zumindest teilweise in einem 3D-Verfahren hergestellt ist

6. Fluggastsitzteilervorrichtung nach einem der vorhergehenden Ansprüche,
**dadurch gekennzeichnet, dass**
zumindest eines der Hauptträgerelemente (14, 16, 18, 30, 32, 34) zumindest im Wesentlichen aus einem hochfesten Metall ausgebildet ist.

7. Fluggastsitzteilervorrichtung nach einem der vorhergehenden Ansprüche,
**dadurch gekennzeichnet, dass**
zumindest eines der Hauptträgerelemente (14, 16, 18, 30, 32, 34) zumindest im Wesentlichen aus einem Faserverbundwerkstoff ausgebildet ist.

8. Fluggastsitzteilervorrichtung nach einem der vorhergehenden Ansprüche,
**dadurch gekennzeichnet, dass**
zumindest zwei der Hauptträgerelemente (14, 16, 18, 30, 32, 34) über eine Schweißverbindung verbunden sind.

9. Fluggastsitzteilervorrichtung nach einem der vorhergehenden Ansprüche,
**dadurch gekennzeichnet, dass**
zumindest zwei der Hauptträgerelemente (14, 16, 18, 30, 32, 34) über eine Steckverbindung verbunden sind.

10. Sitz, insbesondere Fluggastsitz, mit zumindest einer Fluggastsitzteilervorrichtung (10) nach einem der Ansprüche 1 bis 9.

11. Verfahren zu einer Montage einer Fluggastsitzteilervorrichtung (10) nach einem der Ansprüche 1 bis 9.

12. Verfahren nach Anspruch 11,
**dadurch gekennzeichnet, dass**
die Hauptträgerelemente (14, 16, 18, 30, 32, 34) durch zumindest eine Steckverbindung miteinander verbunden werden.

13. Verfahren zumindest nach Anspruch 11,
**dadurch gekennzeichnet, dass**
die Hauptträgerelemente (14, 16, 18, 30, 32, 34) geschweißt werden.

## Claims

1. Flight passenger seat divider device, with at least one seat divider unit (12) comprising at least four main support elements (14, 16, 18, 30, 32, 34) which are implemented separately from each other, wherein at least two of the main support elements (14, 16, 18, 30, 32, 34) are embodied as separately implemented side walls and wherein at least two of the main support elements (14, 16, 18, 30, 32, 34) are embodied as connection elements which are configured to connect the at least two main support elements (14, 16) which are embodied as side walls, wherein the at least two main support elements (32, 34) that are embodied as connection elements are further embodied as torsion rods,
**characterised in that** the seat divider unit (12) is in at least one mounted state, viewed in a cross section plane, embodied as a box, said box having in the mounted state, viewed in the cross section plane, a closed profile.

2. Flight passenger seat divider device according to claim 1,
**characterised in that** at least one of the main support elements (18, 30, 32, 34) is embodied as a connection element.

3. Flight passenger seat divider device according to claim 1 or 2,
**characterised in that** at least one of the main support elements (14, 16, 18, 30) is implemented by a thin-walled element.

4. Flight passenger seat divider device according to one of the preceding claims,
**characterised in that** at least one of the main support elements (14, 16, 18, 30, 32, 34) is produced at least partly in a cutting process.

5. Flight passenger seat divider device according to one of the preceding claims,
**characterised in that** at least one of the main support elements (14, 16, 18, 30, 32, 34) is produced at least partly in a 3D method.

6. Flight passenger seat divider device according to one of the preceding claims,
**characterised in that** at least one of the main support elements (14, 16, 18, 30, 32, 34) is implemented at least substantially of a high-strength metal.

7. Flight passenger seat divider device according to one of the preceding claims,
**characterised in that** at least one of the main support elements (14, 16, 18, 30, 32, 34) is implemented of a fibre composite material.

8. Flight passenger seat divider device according to one of the preceding claims,
**characterised in that** at least two of the main support elements (14, 16, 18, 30, 32, 34) are connected via a welded connection.

9. Flight passenger seat divider device according to one of the preceding claims,
**characterised in that** at least two of the main support elements (14, 16, 18, 30, 32, 34) are connected via a plug connection.

10. Seat, in particular flight passenger seat, with at least one flight passenger seat divider device (10) according to one of claims 1 to 9.

11. Method for an assembly of a flight passenger seat divider device (10) according to one of claims 1 to 9.

12. Method according to claim 11,
**characterised in that** the main support elements (14, 16, 18, 30, 32, 34) are connected to one another via at least one plug connection.

13. Method at least according to claim 11,
**characterised in that** the main support elements (14, 16, 18, 30, 32, 34) are welded.

## Revendications

1. Dispositif séparateur de siège de passager aérien, avec au moins une unité séparateur de siège (12) comprenant au moins quatre éléments porteurs principaux (14, 16, 18, 30, 32, 34) qui sont réalisés séparément l'un de l'autre,
au moins deux des éléments porteurs principaux (14, 16, 18, 30, 32, 34) étant réalisés comme des parois latérales qui sont réalisés séparément l'une de l'autre et au moins deux des éléments porteurs principaux (14, 16, 18, 30, 32, 34) étant réalisés comme des éléments de raccordement qui sont prévus à raccorder les au moins deux éléments porteurs principaux (14, 16) qui sont réalisés comme parois latérales, les au moins deux éléments porteurs principaux (32, 34) qui sont réalisés comme des éléments de raccordement étant réalisés de plus comme des tiges de torsion, **caractérisé en ce qu'**, en au moins un état monté et vue dans un plan de coupe transversale (20), l'unité séparateur de siège (12) est réalisé en forme de caisse, la caisse ayant, en état assemblé et vue dans le plan de coupe transversale, un profile renfermé.

2. Dispositif séparateur de siège de passager aérien selon la revendication 1, **caractérisé en ce qu'**au moins un des éléments porteurs principaux (18, 30, 32, 34) est réalisé comme élément de raccordement.

3. Dispositif séparateur de siège de passager aérien selon l'une quelconque des revendications 1 ou 2,
**caractérisé en ce qu'**au moins un des éléments porteurs principaux (14, 16, 18, 30) est réalisé par un élément à paroi mince.

4. Dispositif séparateur de siège de passager aérien selon l'une quelconque des revendications précédentes, **caractérisé en ce qu'**au moins un des éléments porteurs principaux (14, 16, 18, 30, 32, 34) est produit au moins partiellement dans un procédé de découpage.

5. Dispositif séparateur de siège de passager aérien selon l'une quelconque des revendications précédentes, **caractérisé en ce qu'**au moins un des éléments porteurs principaux (14, 16, 18, 30, 32, 34) est produit au moins partiellement dans un procédé 3D.

6. Dispositif séparateur de siège de passager aérien selon l'une quelconque des revendications précédentes, **caractérisé en ce qu'**au moins un des éléments porteurs principaux (14, 16, 18, 30, 32, 34) est implémenté au moins sensiblement d'un métal à haute résistance.

7. Dispositif séparateur de siège de passager aérien selon l'une quelconque des revendications précédentes, **caractérisé en ce qu'**au moins un des éléments porteurs principaux (14, 16, 18, 30, 32, 34) est implémenté au moins sensiblement d'un matériau composite en fibres.

8. Dispositif séparateur de siège de passager aérien selon l'une quelconque des revendications précédentes, **caractérisé en ce qu'**au moins deux des éléments porteurs principaux (14, 16, 18, 30, 32, 34) sont raccordés par le biais d'une connexion soudée.

9. Dispositif séparateur de siège de passager aérien selon l'une quelconque des revendications précédentes, **caractérisé en ce qu'**au moins deux des éléments porteurs principaux (14, 16, 18, 30, 32, 34) sont raccordés par le biais d'une connexion à fiche.

10. Siège, en particulier siège de passager aérien, avec au moins un dispositif séparateur de siège de passager aérien (10) selon l'une quelconque des revendications 1 à 9.

11. Procédé pour un assemblage d'un dispositif séparateur de siège de passager aérien (10) selon l'une quelconque des revendications 1 à 9.

12. Procédé selon la revendication 11, **caractérisé en ce que** les éléments porteurs principaux (14, 16, 18, 30, 32, 34) sont raccordés l'un avec l'autre par au moins une connexion à fiche.

13. Procédé au moins selon la revendication 11, **caractérisé en ce que** les éléments porteurs principaux (14, 16, 18, 30, 32, 34) sont soudés.
